# EUROPÄISCHE PATENTSCHRIFT

(11) **EP 2 005 035 B1**
(45) Veröffentlichungstag und Bekanntmachung des Hinweises auf die Patenterteilung: **15.07.2009**
(21) Anmeldenummer: 07722746.0
(22) Anmeldetag: 05.01.2007
(51) Int. Cl.: F16H 55/30

(54) **KETTENRAD UND STEUERKETTENTRIEB ZUR KOMPENSATION DYNAMISCHER BELASTUNGEN**
CHAIN WHEEL AND TIMING CHAIN DRIVE FOR THE COMPENSATION OF DYNAMIC LOADS
ROUE DENTÉE À CHAÎNE ET COMMANDE PAR CHAÎNE DE DISTRIBUTION POUR LA COMPENSATION DE CONTRAINTES DYNAMIQUES

(30) Priorität: 12.04.2006 DE 102006017247
(43) Veröffentlichungstag der Anmeldung: 24.12.2008
(73) Patentinhaber: iwis motorsysteme GmbH & Co. KG, 81369 München (DE)
(72) Erfinder: RITZ, Andreas, 81379 München (DE); WELKE, Lutz, 85049 Ingolstadt (DE); HIRSCHMANN, Volker, 82256 Fürstenfeldbruck (DE)
(74) Vertreter: Grünecker, Kinkeldey, Stockmair & Schwanhäusser Anwaltssozietät
(86) Internationale Anmeldenummer: PCT/EP2007/000069
(87) Internationale Veröffentlichungsnummer: WO 2007/118519

(56) Entgegenhaltungen:
- EP-A1- 1 184 593
- WO-A-03/046413
- WO-A-03/081084
- DE-A1-4102004 027 06
- US-A- 4 227 422
- US-A1- 2003 176 251

## Beschreibung

Die Erfindung betrifft ein Kettenrad, insbesondere für einen Steuerkettentrieb, mit einer Drehachse, einem um die Drehachse angeordneten Zahnkranz mit einer Vielzahl von um den Umfang verteilten, einander abwechselnden Zähnen und Zahnlücken sowie mindestens einer Kettenführung, wobei der Zahnkranz und die Kettenführung feststehend miteinander verbunden sind, die Kettenführung eine umlaufende Stützkontur zur Anlage an Auflageflächen von Kettenlaschen aufweist und die Stützkontur oder erhabene Bereiche der Stützkontur auf einem gekrümmten Umfang liegen, der den Umkreis der Kettenführung bildet. Des Weiteren betrifft die Erfindung einen entsprechenden Steuerkettentrieb zur Kompensation mechanischer Belastungen mit einer Gelenkkette, einem Antriebskettenrad und mindestens einem Abtriebskettenrad.

Bei der Entwicklung von Kraftfahrzeugen gewinnt das NVH-Verhalten (noise, vibration and harshness) zunehmend an Bedeutung. Neben dem Wunsch der Käufer nach einen hohen Schwingungskomfort trägt auch eine geringere Geräusch- und Schwingungsbelastung des Fahrers zur aktiven Sicherheit bei. Zusätzlich beeinträchtigen insbesondere die Schwingungsbelastungen die Lebensdauer und die notwendige Dimensionierung der betroffenen Bauteile.

In einem Kraftfahrzeug treten eine Vielzahl von Komponenten gleichzeitig als Anregungsquellen für Schwingungen und Geräusche auf. Neben dem Verbrennungsmotor selbst sind dies der Antriebsstrang, das Getriebe, Lüfter, Ansauganlage, Abgasanlage sowie Reifen und Fahrwerk, wobei die Anteile der einzelnen Schall- und Schwingungsquellen nicht vernachlässigbar ist. Eine dominante Rolle dabei spielen jedoch die Schwingungs- und Geräuschanregungen des Antriebsstrangs, z.B. Drehschwingungen der Kurbel- und Nockenwelle, unregelmäßige Drehbewegungen des Schwungrads, Lagerbelastungen sowie Winkelgeschwindigkeitsänderungen und Drehmomentanregungen der Kurbelwelle. Diese dynamischen Belastungen des Antriebsstrangs, insbesondere eines Steuerkettentriebs von Brennkraftmaschinen aus einem Kurbelwellenkettenrad, mindestens einem Nockenwellenkettenrad und einer Antriebskette, setzen sich dominant im gesamten Kraftfahrzeug fort und überlagern alle weiteren Schall- und Schwingungsquellen.

Die Reduzierung der dynamischen Belastung im Antriebsstrang, egal ob Zahnriemen-oder Zahnkettenantrieb, ist seit vielen Jahren ein Schwerpunkt in der Entwicklung von Verbrennungsmotoren. Dabei ist es aus der DE 37 39 336 C2 bekannt, Drehschwingungen durch den Einsatz eines Schwingungsdämpfers entgegenzuwirken, der jedoch einen beträchtlichen zusätzlichen Aufwand und Bauraum erfordert. In der DE 39 20 528 C1 wird vorgeschlagen, den von der Nockenwelle ausgehenden Wechselmomenten durch eine hydraulische Bremseinrichtung entgegenzuwirken. Für einen Zahnriemenantrieb beschreibt die DE 195 20 508 A1 eine unrunde Riemenscheibe, die als Nockenwellenriemenscheibe eingesetzt wird, um die Schwingungsanregungen zu verringern. Dabei hat die hier gezeigte unrunde Riemenscheibe vier vorstehende und vier zurückstehende Bereiche, die in regelmäßigen Abständen um die Riemenscheibe angeordnet sind. Darüber hinaus ist aus der JP 10266868 A bereits ein ovales Kurbelwellenritzel für einen Zahnriemen-Steuerantrieb bekannt Die DE 202 20 367 U1 und die DE 203 19 172 U1 beschreiben darüber hinaus die Entwicklung einer nicht auf Zahnriemen beschränken Synchronantriebsvorrichtung, die die dynamische Belastung des Antriebsstrangs durch ein entgegengesetztes schwankendes korrigierendes Drehmoment mittels eines nichtkreisförmigen Profils, insbesondere elliptischen Profils, mindestens eines Zahnriemenrads verringert.

Belastungsreduzierte Steuerkettentriebe sind zum Beispiel bereits aus der EP 907 041 B1 und der EP 1 308 646 A2 bekannt. Dabei sind die Zähne eines Kettenrads in ihrer Radial- und Umfangsposition geringfügig gegenüber einer herkömmlichen gleichförmigen Beabstandung versetzt. Auf diese Weise werden die radialen Eingriffspositionen des Kettengelenke zwischen den Kettenradzähnen variiert, während der Teilungsabstand zwischen den im Eingriff befindlichen Kettengelenken konstant bleibt. Dabei ist die Anordnung der Kettenradzähne entweder zufallsverteilt oder im Hinblick auf eine gleichmäßige Steuerkettenbelastung ausgewählt.

Darüber hinaus sind Kettenantriebe für Laschenketten bekannt, die mit Hilfe einer ergänzenden Kettenführung das Einlauf- und Auftreffverhalten der Kette im Kettenrad verändern. Dabei stützen sich die Laschen der Ketten auf diesen Führungen ab und verändern so den Eingriff der Kettengelenke in den Zähnen. Zum einen aus der JP 61171942 A exzentrisch gegenüber den Kettenrädern angeordnete und drehbar gelagerte Führungen mit einem vergrößerten Durchmesser bekannt um einen flacheren Einlaufwinkel der Kette zu realisieren. Zur Reduzierung der Kontaktbelastung zwischen den Kettengelenken und den Zähnen der Kettenräder schlägt die WO 03/093700 A2 eine Kettenführung vor, die sich mit entsprechenden Einlaufführungen versetzt gegenüber den kreisförmigen Führungsabschnitt des Kettenrads fortsetzt. Aus der gattungsgemäße EP 1 184 593 B1 ist weiter eine Kettenführung zur Reduzierung der Kontaktgeräusche zwischen Kettengelenk und Zähnen bekannt. Dabei ist die Kettenführung so mit dem Kettenrad verbunden, dass der Momentanpol eines sich im Eingriff befindlichen Kettengliedes vom ersten Kettengelenk zum Berührungspunkt der Kettenlasche mit der Stützkontur der Kettenführung und dann zum zweiten Kettengelenk verschiebt. Die aus einer solchen Kettenführung resultierende Wippbewegung des Kettenglieds ermöglicht eine gewünschte Geräusch- und Vibrationsreduzierung. Je nach Ausgestaltung der Kettenlaschen und ihren Auflageflächen ist die mit dem Kettenrad verbundene Kettenführung mit einer glatten oder unebenen Oberfläche versehen, d.h. mit der Zähneanzahl des Kettenrads im gleichen Abstand zu den Zähnen wiederkehrenden kreisförmigen, linearen, konvexen oder konkaven Segmenten.

Viele der aus dem Stand der Technik bekannten Lösungen zur Reduzierung der Geräusch- und Schwingungsbelastung des Antriebstrangs haben sich im Rahmen ihres Einsatzes gut bewährt. Die derzeit intensiven Bemühungen, das NVH-Verhalten in Kraftfahrzeugen weiter zu verbessern, erfordern insbesondere auch bei der dominierenden Schall- und Schwingungsquelle des Antriebsstrangs weitere Entwicklungsbemühungen. Darüber hinaus ist die dynamische Belastung des Antriebs bei den bisher zur Verfügung stehenden Lösungen immer noch relativ hoch. Eine weitere Belastungsreduzierung im Steuertrieb ist daher wünschenswert und könnte über Downsizing-Effekte auch zu einer Kostenreduzierung im Bereich des Steuerantriebes führen.

Der vorliegenden Erfindung liegt daher die Aufgabe zu Grunde, die dynamische Belastung im Antriebsstrang, insbesondere in einem Steuerkettentrieb, zu reduzieren und dabei die Nachteile bekannter Lösungen zu vermeiden sowie deren Wirksamkeit zu übertreffen.

Diese Aufgabe wird mit einem gattungsgemäßen Kettenrad dadurch gelöst, dass der Umkreis der Kettenführung ein nicht kreisförmiges Profil aufweist.

Durch das nicht-kreisförmige Profil des Umkreises der Kettenführung wird gezielt eine zusätzliche Erregung in den Steuerantrieb eingebracht und die Kettenkräfte im Steuertrieb reduziert. Die Auslegung dieser gezielten zusätzlichen Anregung des Steuertriebs auf dem Bereich resonanter Stellen lässt die Kettenkräfte deutlich sinken und ermöglicht so neben einer Verbesserung des NVH-Verhaltens auch eine kleinere Dimensionierung des Steuertriebs bei gleicher Leistungsfähigkeit und Einsatzbedingungen.

Bevorzugt kann dabei der Abstand zwischen dem Umkreis und einem Mittelpunkt der Kettenführung von Zahn zu Zahn mindestens teilweise variieren, um das nichtkreisförmige Profil zu bilden. Der unrunde Verlauf des gekrümmten Umfangs der Stützkontur ändert sich bereichsweise mit dem Drehwinkel des Kettenrads, d.h. die Abstände zwischen der Drehachse und dem Umkreis der Kettenführung variierten zumindest teilweise für die jeweils durch den Mittelpunkt der Zahnspitzen (oder einem anderen wiederkehrenden Punkt des Zahnprofils) und der Drehachse verlaufenden Mittelpunktsstrahlen. Bei einer gleichförmigen Änderung der Abstände ergibt sich ein sinusförmiger Verlauf der Stützkontur, der hinsichtlich des Gleichlaufs eines Steuerkettenantriebs vorteilhaft ist. Das nicht-kreisförmige Profil des Umkreises der Kettenführung ist so unabhängig von im Bereich der Zähne oder Zahnlücken auftretenden wiederkehrenden Unstetigkeiten in der Stützkontur.

Eine günstige Ausgestaltung sieht vor, dass der Umkreis der Kettenführung mindestens zwei vorstehende Abschnitte aufweist. Die Verwendung von mindestens zwei vorstehenden Abschnitten ermöglicht die Kompensation oder Reduzierung mehrerer wiederkehrender Erregungen bei einem Umlauf des Kettenrades. Dabei kann der Umkreis der Kettenführung insbesondere ein ellipsenförmiges Profil aufweisen, um zwei im gleichen Abstand zueinander wiederkehrende Anregungen auszugleichen, z.B. eine sinusförmige Anregung, wie sie beispielsweise bei einem Vier-Zylinder-Reihen-Verbrennungsmotor an der Kurbelwelle auftreten kann. Bevorzugt weist dabei das ellipsenförmige Profil der Kettenführung ein Seitenverhältnis zwischen dem größten und kleinsten Abstand zum Mittelpunkt der Kettenführung von kleiner als 1,025, bevorzugt zwischen 1,01 und 1,015, auf. Dieses Seitenverhältnis ermöglicht eine gleichmäßigere Verteilung der durch die Zähne des Kettenrads und die Kettenführung in den Steuerantrieb übertragenen Kräfte. Die Anzahl der vorstehenden Abschnitte und damit auch der Vertiefungen kann insbesondere entsprechend der Motorordnung, dessen Schwingverhalten beeinflusst werden soll, ausgewählt werden.

Eine zweckmäßige Ausführungsform sieht vor, dass der Mittelpunkt der Kettenführung in der Drehachse des Kettenrads liegt. Durch die Anordnung des Mittelpunkts der Kettenführung in der Drehachse des Kettenrads, d.h. dem Mittelpunkt des Kettenrads, wird eine möglichst gleichmäßige Massenverteilung erreicht, die Grundlage für einen möglichst störungsfreien Rundlauf des Kettenrads ist.

Für einen gleichmäßigen Krafteintrag aus dem erfindungsgemäßen Kettenrad in den Antriebsstrang sind zwei Kettenführungen vorgesehen, wobei die Kettenführungen symmetrisch angeordnet sind, insbesondere auf jeder Seite des Zahnkranzes des Kettenrads eine Kettenführung vorgesehen ist.

Eine Variante sieht vor, dass der Zahnkranz kreisförmig und/oder die Zähne des Zahnkranzes gleichförmig um die Drehachse angeordnet sind. In den meisten herkömmlichen Steuerkettentrieben werden kreisförmige Kettenräder mit gleichförmig angeordneten Zähnen eingesetzt. So können herkömmliche Kettenantriebe ohne größere konstruktive Änderungen mit einem erfindungsgemäßen Kettenrad ausgestattet werden. Darüber hinaus ist auch eine Kombination der mindestens einen Kettenführung mit einem nichtkreisförmigen Umkreisprofil mit einem unrunden Kettenrad oder einer ungleichförmigen Anordnung der Kettenradzähne in ihrer Radial- und Umfangsposition auf dem Kettenrad möglich. Eine derartige Kombination kann durch die Überlagerung verschiedener Kornpensationseffekte zu einer nochmals verbesserten Vergleichmäßigung dynamischer Belastungen im Antriebsstrang führen.

Eine bevorzugte Ausbildung sieht vor, dass in einem Zahnlücken-Segment des Kettenrads mit kleinstem Abstand des nichtkreisförmigen Profils der Kettenführung zu einem Mittelpunkt der Kettenführung der kleinste Abstand derart gewählt ist, dass die Achse des in diesem Zahnlücken-Segment mit dem Zahnkranz in Eingriff stehenden Kettengelenks auf dem Teilkreis des Zahnkranzes liegt. Als Zahnlücken-Segment ist dabei beispielsweise der Bereich zwischen zwei durch den Mittelpunkt der Zahnspitzen benachbarter Zähne hindurchgehender Mittelpunktsstrahlen. Eine solche Ausgestaltung des kleinsten Abstands ermöglicht, dass die Kraftübertragung im Wesentlichen über das Kettengelenk erfolgt, was wiederum Voraussetzung für eine möglichst gleichmäßige Belastungsverteilung bzw. Reduktion der Dynamik im Kettentrieb ist. Demgegenüber ist der größte Abstand zwischen Kettenführung und dem Mittelpunkt der Kettenführung bevorzugt so ausgeführt, dass wesentliche Kraftanteile über die Auflageflächen der Kettenlaschen und die umlaufende Stützkontur der Kettenführung übertragen werden. Dabei ist es von Vorteil, wenn der größte Abstand noch nicht zu einem Aufsteigen der Kette bzw. der Kettengelenke in der Verzahnung des Kettenrads führt. Ein Aufsteigen der Ketten in der Verzahnung reduziert oder verhindert den Kontakt zwischen Kettengelenk und Zahnlücke mit der Folge einer schlechteren Führung der Kette und einer erhöhten Geräuschentwicklung.

Zweckmäßigerweise können die Zahnlücken flache Seitenflanken aufweisen. Seitenflanken mit einer flachen Neigung führen zu einem verhältnismäßig großen Abstand der Seitenflanken zueinander und damit zu einer verhältnismäßig großen Zahnlücke. Je größer die Zahnlücke desto größer kann der Unterschied zwischen dem kleinsten und größten Abstand des Umkreisprofils der Kettenführung zu dessen Mittelpunkt sein und damit auch die Möglichkeit der Belastungs- und Schwankungsreduzierung der Kettenkräfte im Steuertrieb. Durch die Abstandsvariation zwischen nicht-kreisförmigen Profil und Mittelpunkt der Kettenführung wird eine relative Bewegung der Gelenkmittelpunktsachse zur Mittelachse der Zahnlücke induziert, wodurch eine sich sonst ergebende Verspannung der Kette über dem Kettenrad vermieden oder zumindest reduziert wird.

Des Weiteren bezieht sich die vorliegende Erfindung auf einen Steuerkettentrieb mit Kompensation dynamischer Belastungen, mit einer Gelenkkette, insbesondere einer Rollenkette, mit durch Kettengelenke miteinander verbundene Innenkettenglieder und Außenkettenglieder, wobei die Innenkettenglieder und Außenkettenglieder parallel zueinander angeordnete Innenlaschen und Außenlaschen umfassen, einem Antriebskettenrad und mindestens einem Abtriebkettenrad, wobei mindestens eines der Kettenräder, bevorzugt das Antriebskettenrad, zur Kompensation der dynamischen Belastung als Kettenrad mit einer Kettenführung mit nicht-kreisförmigen Umkreisprofil entsprechend den oben genannten erfindungsgemäßen Ausführungen ausgebildet ist. In einem derartigen Steuerkettentrieb lässt sich die durch den Verbrennungsmotor eingetragene dynamische Belastung des Kettentriebs insbesondere im Resonanzbereich vergleichmäßigen und die zugehörige Schwingungsamplitude deutlich reduzieren.

Für ein gutes Zusammenspiel der Gelenkkette mit dem Antriebskettenrad und den Abtriebskettenrädem des Steuerkettentriebs können die Innenlaschen und/oder Außenlaschen der Gelenkkette eine Auflagefläche zur Anlage an die umlaufende Stützkontur der Kettenführung aufweisen. Bereits bei einer im Wesentlichen parallelen Anordnung der Auflageflächen der Innen- und/oder Außenlaschen zur Laufrichtung der Gelenkkette ist die Ausbildung einer geräuschreduzierenden Bewegung zwischen den Gelenken eines zugehörigen Kettenglieds möglich. Neben einfachen Laschenformen, bei denen die Außenkanten der Laschen in Kettenlaufrichtung parallel zueinander verlaufen, können die Innen- und Außenlaschen beispielsweise auch tailliert oder in einer anderen angepassten Form ausgebildet sein. Eine an den Radius einer Kettenführung mit gleichförmiger Stützkontur angepasste taillierte Lasche kann das Lastprofil der Kraftübertragung sowie der Kraftverteilung zwischen Kettengelenk und Auflagefläche der Kettenlaschen und die Geräuschentwicklung beim Eingriff der Kette ins Kettenrad weiter vergleichmäßigen. Weiter ermöglicht eine taillierte Laschenform eine Reduzierung der maximalen Flächenpressung zwischen Lasche und Kettenführung. Darüber hinaus können andere Laschenformen und Konturen der Segmente des Kettenrads derart zueinander ausgebildet sein, dass zusätzlich zur Vergleichmäßigung der Kettenkräfte im Steuertrieb eine zusätzliche Geräusch- und Schwingungsreduzierung möglich ist.

Eine bevorzugte Ausführungsform des Steuerkettentriebs sieht vor, dass das Antriebskettenrad mit mindestens einer Kettenführung ausgebildet ist und an einer Kurbelwelle eines Verbrennungsmotors angeordnet ist, wobei zu einem Zeitpunkt des größten Moments im Antriebskettenrad der tangentiale Anlaufpunkt zwischen der Antriebskette und dem Antriebskettenrad im Wesentlichen mittig zwischen einem vorstehenden Abschnitt, der mit der Antriebskette in Berührung steht, und einem folgenden zurückstehend Abschnitt, der noch nicht mit der Antriebskette in Berührung steht, angeordnet ist. Zum Zeitpunkt des größten Moments in dem Antriebskettenrad ist gleichzeitig auch die Geschwindigkeit der Antriebskette im Lastrum am größten. Der tangentiale Anlaufpunkt zwischen der Antriebskette und dem Antriebskettenrad ist der Berührungspunkt, der Tangente durch die Antriebskette im Lastrum und dem Teilkreis des Antriebskettenrads. So lässt sich eine Reduzierung der Belastung des Steuertriebs direkt am Ort des Eintrags erreichen und die Schwingungsamplituden insbesondere im Resonanzbereich durch die zusätzliche Erregung des nicht-kreisförmigen Umkreisprofils der Kettenführung reduzieren. Dabei ist die Anzahl der vorstehenden und zurückstehenden Abschnitte abhängig von der zu unterdrückenden Schwingungsordnung. Die Ordnungszahl der zu unterdrückenden Schwingungen entspricht der Anzahl der vorstehenden Abschnitte und entsprechend auch der Anzahl der zurückstehenden Abschnitte. Die exakte Lage des tangentialen Anlaufpunkts zum Zeitpunkt des größten Moments ist weiter von Korrekturfaktoren abhängig, die die individuelle Ausgestaltung des Steuerkettentriebs, des Verbrennungsmotors sowie der Schwingungsanregung und weiteren Nebeneffekten berücksichtigen, so dass die mittige Lage des Anlaufpunkts zwischen einem vorstehenden Abschnitt und einem folgenden zurückstehenden Abschnitt um ± 10%, bevorzugt ± 5% des Winkels zwischen dem vorstehenden Abschnitt und dem zurückstehenden Abschnitt schwanken kann.

Im Falle, dass der Verbrennungsmotor ein Vierzylindermotor ist, kann die Kettenführung als ellipsenförmiges Profil ausgebildet sein und der mit der Antriebskette in Berührung stehende vorstehender Abschnitt ca. 45° gegenüber dem Anlaufpunkt versetzt angeordnet sein. Durch das um 45° versetzte ellipsenförmige Kettenführungsprofil kann die Schwingungsamplitude einer Schwingung zweiter Ordnung signifikant reduziert werden, wobei auch hier die exakte Position von entsprechenden Korrekturfaktoren zur Berücksichtigung von Nebeneffekten abhängig ist, wobei die Schwankungsbreite bis zu ± 9°, bevorzugt ± 4,5° beträgt. Durch das ellipsenförmige Kettenführungsprofil wird so auf halber Winkellage zwischen den Anlegungsspitzen der Kolben die zusätzliche Erregung der Kettenführung auf den Kettentrieb aufgeprägt und entsprechend die Schwingungsamplituden zweiter Ordnung reduziert.

Im Folgenden wird anhand eines Ausführungsbeispiels die vorliegende Erfindung näher erläutert. Es zeigen:
- Fig. 1: eine Draufsicht auf einen Kettenantrieb mit zwei Kettenrädern;
- Fig. 2: eine Draufsicht auf ein Kettenrad mit Kettenführung aus Fig. 1;
- Fig. 3: ein Schnitt durch das Kettenrad mit Kettenführung auf Fig. 2 entlang des Schnitts III-III aus Fig. 1;
- Fig. 4: ein Ausschnitt des Kettenrads mit Kettenführung aus Fig. 1 mit minimaler Ab- stützung der Antriebskette auf der Kettenführung;
- Fig. 5: einen Ausschnitt des Kettenrads mit Kettenführung aus Fig. 1 mit maximaler Abstützung der Antriebskette auf der Kettenführung; und
- Fig. 6: eine Grafik der dynamischen Belastung des Kettenantriebs aus Fig. 1 darge- stellt als Lagerkraft des Kettenrads über der Zeit.

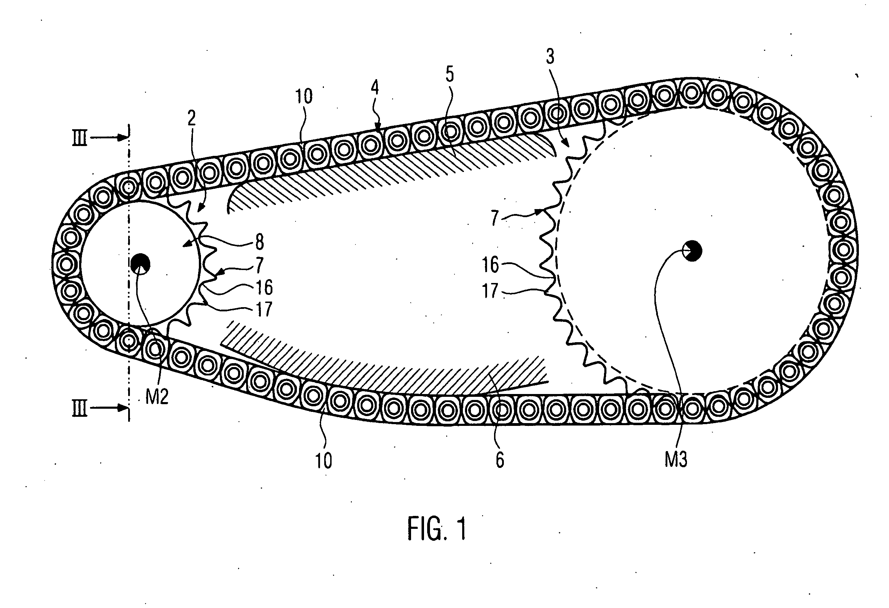

Fig. 1 zeigt einen einfachen Kettenantrieb 1 mit zwei Kettenrädern 2, 3 und einer endlosen Antriebskette 4, die um die Kettenräder 2, 3 herumgelegt ist. Im Lasttrum der Antriebskette ist eine Führungsschiene 5 vorgesehen, die die Antriebskette 4 zwischen den Kettenrädern 2, 3 unterstützt. Im Leertrum der Antriebskette 4 ist weiter eine Spannschiene 6 vorgesehen, durch die die Antriebskette 4 mit einer nach Außen wirkenden konstanten Vorspannung beaufschlagt wird. Die Spannschiene 6 ist zum Aufbringen der Vorspannung entsprechend gelagert (nicht gezeigt) und mit einer Spannvorrichtung (nicht gezeigt) verbunden.

Das kleinere Kettenrad 2 weist dabei einen kreisförmig um die Drehachse bzw. den Mittelpunkt M2 des Kettenrads 2 angeordneten Zähnekranz 7 mit achtzehn Zähnen 17 sowie eine Kettenführung 8 auf, wobei der Umfang der Stützkontur 9 ein nicht kreisförmiges Profil aufweist. Das größere Kettenrad 3 besitzt demgegenüber einen Zahnkranz 7 mit sechsunddreißig Zähnen 17, der ebenfalls kreisförmig um die Drehachse bzw. den Mittelpunkt M3 des Kettenrads 3 angeordnet ist. Die Antriebskette 4 ist mit siebzig Kettengliedern 10 versehen, beispielsweise mit einer Teilung von 3/8 Zoll.

Der in Fig. 1 dargestellte schematische Kettenantrieb 1 kann dabei als minimaler Steuerkettentrieb eines Vier-Zylinder-Reihen-Hubkolben-Verbrennungsmotor fungieren. Dabei ist das kleinere Kettenrad 2 mit der Kurbelwelle (nicht gezeigt) des Verbrennungsmotors und das größere Kettenrad 3 mit der Nockenwelle (nicht gezeigt) des Verbrennungsmotors verbunden.

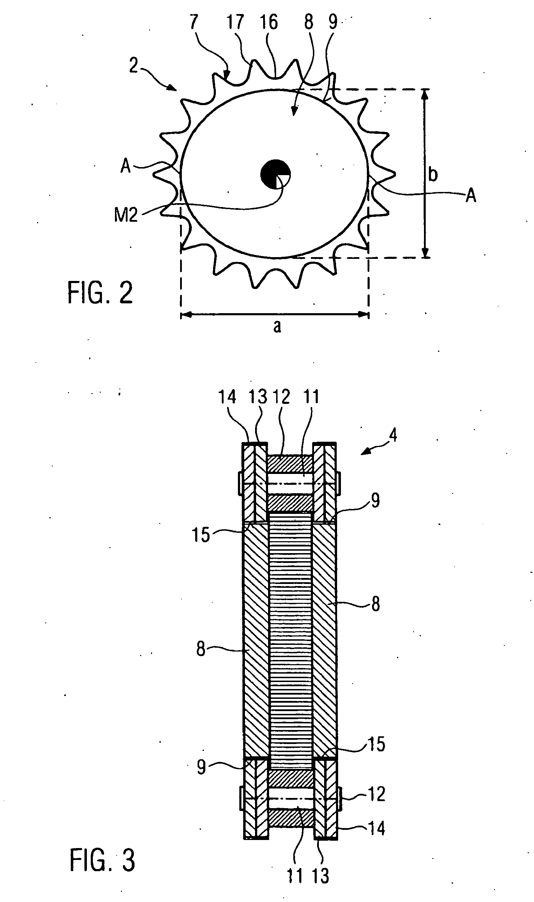

Fig. 2 zeigt eine vergrößerte Ansicht des kleineren Kettenrads 2 mit Kettenführung 8 ohne Antriebskette 4. Die gegenüber den Zahnkranz 7 des Kettenrads 2 seitlich vorstehende Kettenführung 8 weist zur Anlage der Auflageflächen 15 der Kettenlaschen 13, 14 eine umlaufende Stützkontur 9 auf, die den Umkreis der Kettenführung 8 bildet. In der in Fig. 2 dargestellten Ausführungsform ist die Kettenführung als Ellipse mit zwei vorstehenden Abschnitten A ausgebildet, wobei der Durchmesser a horizontal zur Darstellung des Kettenrads 2 größer ist als der Durchmesser b senkrecht zur Darstellung des Kettenrads 2. Die in Fig. 2 dargestellte elliptische Kettenführung 8 weist eine Stützkontur 9 mit einer gleichförmig gekrümmten Oberfläche auf, so dass die Stützkontur 9 selbst den Umkreis der Kettenführung 8 bildet. Neben einer solchen gleichmäßig gekrümmten Oberfläche der Stützkontur können auch entsprechend der in der EP 1 184 593 B1 gezeigten Varianten der Kettenführung die Oberfläche der Stützkontur 9 zum Zusammenwirken mit den entsprechenden Formen der Kettenlaschen 13, 14 der einzelnen Kettenglieder 10 mit einer linearen, konkaven oder konvexen Oberflächenformen ausgebildet sein. Diese lineare, konkave oder konvexe Oberflächenform wiederholt sich regelmäßig von Zahn zu Zahn, so dass sich von Zahn zu Zahn mindestens immer ein erhabener Bereich oder Punkt ausbildet. Bei einer derartigen Ausbildung der umlaufenden Stützkontur wird der Umkreis der Kettenführung durch die Verbindung der erhabenen Bereiche mit einem stetig gekrümmten Kurvenverlauf gebildet. Der Umkreis ist daher entsprechend als Öffnung mit dem kleinsten Umfang-Volumen-Verhältnis definiert in den die Kettenführung 8 gerade noch hineinpasst, wobei im Wesentlichen jeder einen Abschnitt der Kettenführung 8 zugeordneter erhabener Bereich der Stützkontur den Umkreis berührt.

Fig. 3 zeigt einen Schnitt durch das Kettenrad 2 entlang der Linie III-III in Fig. 1 mit der im Eingriff befindlichen Antriebskette 4. An dieser Schnittzeichnung ist deutlich zu erkennen, dass das Kettenrad 2 aus einem mittleren Abschnitt besteht, an dem am Umfang der Zahnkranz 7 mit den nach Außen vorstehenden Zähnen 17 angeordnet sind und in die die Gelenkhülsen 11, bzw. die darauf angeordneten Rollen einer Rollenkette, eingreifen. Durch die Gelenkhülsen 11 erstrecken sich die Gelenkbolzen 12, durch die die benachbarten Kettenglieder 10 miteinander verbunden werden. Die Innenlaschen 13 und Außenlaschen 14 weisen zumindest auf der dem Kettenrad 2 zugewandten Seite Auflageflächen 15 auf, die an der Stützkontur 9 der auf beiden Seiten des Kettenrads 2 vorgesehenen Kettenführung 8 anliegen. Neben der in Fig. 3 dargestellten ausgefüllten Kettenführung 8 kann die Kettenführung auch als ellipsenförmiger Ring ausgebildet sein, der vom Mittelteil des Kettenrads 2 seitlich vorsteht.

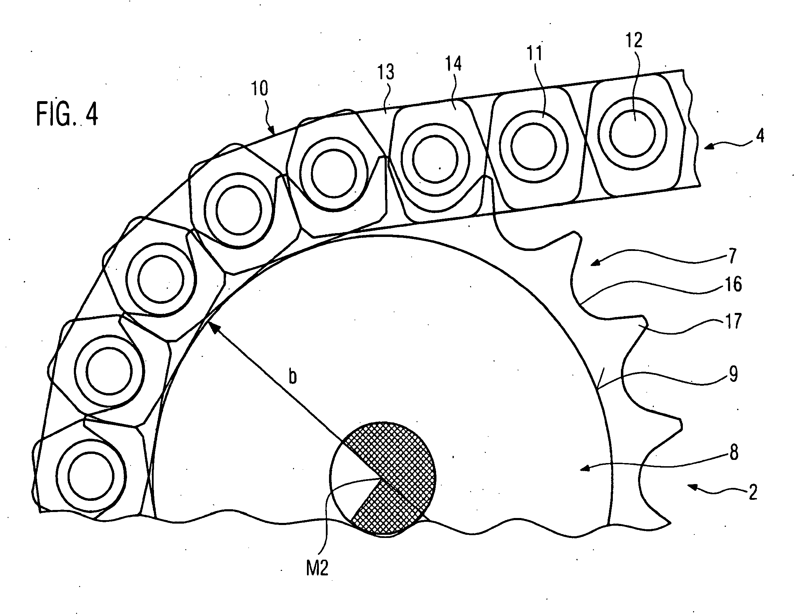

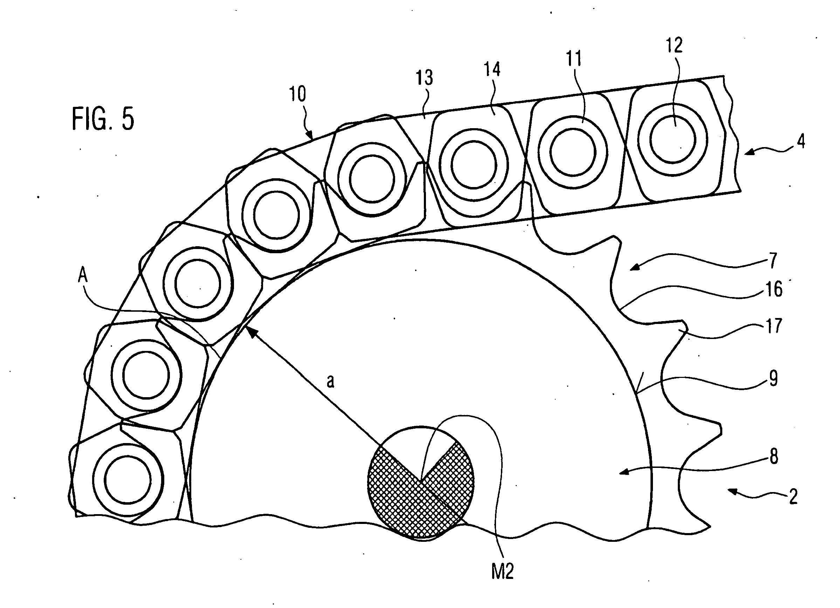

Fig. 4 und 5 zeigen nochmals einen vergrößerten Ausschnitt des Kettenrads 2 mit der im Eingriff stehenden Antriebskette 4. Der Abbau der Kettenkraft zwischen dem Kettenrad 2 und der Antriebskette 4 erfolgt beim Kettenantrieb 1 über den Zahnkranz 7 und die Kettenführung 8 des Kettenrads 2 und wird in ihrer Verteilung wesentlich durch die momentane Position der Stützkontur 9 der Kettenführung 8 bestimmt. Dabei wird in der Normallage der Kette 4 in der Verzahnung die Kettenkraft über die ersten vier bis fünf im Eingriff befindlichen Zähne 17 abgebaut. Dabei zeigt Fig. 4 die Position des Kettenrads 2, bei dem der kleinste Durchmesser b der Kettenführung 8 mit ellipsenförmigen Umkreisprofil im vollen Eingriff mit der Antriebskette 4 bzw. den Innen- und Außenlaschen 13, 14 der jeweiligen Kettenglieder 10 steht. Die Gelenkhülsen 11 der mit dem Kettenrad 2 im Eingriff stehenden Kettenglieder 10 liegen optimal angepasst an die Zahnlücken 16 des Zahnkranzes 7 an, d.h. die Gelenkachsen der Kettengelenke liegen auf dem Teilkreis des Zahnkranzes 7. Der Kraftabbau vom Kettenrad 2 zur Antriebskette 4 erfolgt in dieser Anordnung im Wesentlichen über den Kontakt der Kettengelenke mit dem Zahnkranz 7 und nur zu einem minimalen Teil zwischen den Kettenlaschen 13, 14 und der Kettenführung 8.

Demgegenüber zeigt Fig. 5 die Extremlage der Antriebskette 4 auf dem Kettrad 2, bei der der größte Durchmesser a der elliptischen Kettenführung 8 insbesondere auf die ersten (4 bis 5) der im Eingriff mit der Antriebskette 4 sich befindenden Zähne 17 des Kettenrads 2 wirkt. Dabei ist die Überhöhung der Stützkontur 9, bzw. die vorstehenden Abschnitte A der Kettenführung 8 so gewählt, dass die Antriebskette 4 nicht in der Verzahnung des Kettenrads 2 aufsteigt. Dabei ist das Aufsteigen der Kette bzw. des Kettengelenks zwischen den Zähnen 17 nicht nur von dem Seitenverhältnis des größten und kleinsten Abstands (a/2, b/2) zum Mittelpunkt M2 der Kettenführung 8 bzw. des Kettenrads 2, sondern auch abhängig von der Ausgestaltung der Zahnlücken 16. Bei dem vorliegenden ellipsenförmigen Profil der Kettenführung 8 liegt das Seitenverhältnis zwischen größtem Durchmesser a und kleinstem Durchmesser b bei kleiner als 1,025, bevorzugt zwischen 1,01 und 1,015. Beim kleinsten Durchmesser b ist der Abstand (b/2) zum Mittelpunkt M2 als der Abstand anzusehen, bei dem noch ein minimaler Kraftkontakt zwischen den Kettenlaschen 13, 14 und der Stützkontur 9 stattfindet, die hier als zurückstehende Abschnitte B bezeichnet werden. Bei einer zu groß gewählten Überhöhung (a/2) der Stützkonturen 9 kommt es zu einem Aufsteigen der Kette bzw. des Kettengelenks in der Verzahnung mit entsprechend negativen Folgen für den Verschleiß und den Lauf der Kette.

Wird, wie in Fig. 5 gezeigt, die Erhöhung A der Stützkontur 9 wirksam, ergibt sich eine maximale Kontaktkraft zwischen den Auflageflächen 15 der Kettenlaschen 12, 13 und der Stützkontur 9 der Kettenführung 8. Die ersten in den Zahnlücken 16 des Kettenrads 2 liegenden Kettengelenke tragen nur noch gering zum Kraftabbau zwischen Antriebskette 4 und Kettenrad 2 bei. Bei den weiteren Zahnlücken 16 verschiebt sich der Kontaktpunkt zwischen den Gelenkhülsen 11 der Kettengelenke und den Zahnlücken 16 in Richtung der Zahnflanken. Die auf die Kettenlaschen 13, 14 wirkenden maximalen Kontaktkräfte können dabei eine Größe erreichen, die an die Kontaktkraft zwischen dem Zahnkranz und den Kettengelenken heranreicht. Die ungleichmäßige Verteilung der Kontaktkraft zwischen den Kettengelenken der Antriebskette 4 und dem Zahnkranz des Kettenrads 2 sowie zwischen den Kettenlaschen 13, 14 und der Kettenführung 8 des Kettenrads 2 kann die dynamische Belastung des Kettenantriebs 1 insbesondere in der Nähe von Resonanzstellen bei einer geeigneten Anordnung vorstehender Abschnitte A der Stützkontur 9, bzw. des nicht-kreisförmigen Profils des Umkreises der Kettenführung 8 wesentlich reduziert und das NVH-Verhalten in einem Kraftfahrzeug deutlich verbessert werden.

Das nicht-kreisförmige Umkreisprofil der Kettenführung kann insbesondere bei relativ hoch vorstehenden Abschnitten A der Stützkontur 9 zu einem Verspannen der Antriebskette 4 über dem Kettenrad 2 führen. Bei einem solchen Verspannen können durch die Anpassung der Zahnflankenkonturen in den betroffenen Abschnitt des Zahnkranzes 7, insbesondere mittels einer asymmetrischen Zahnform die negativen Wirkungen auf die Kette 4, gemildert werden.

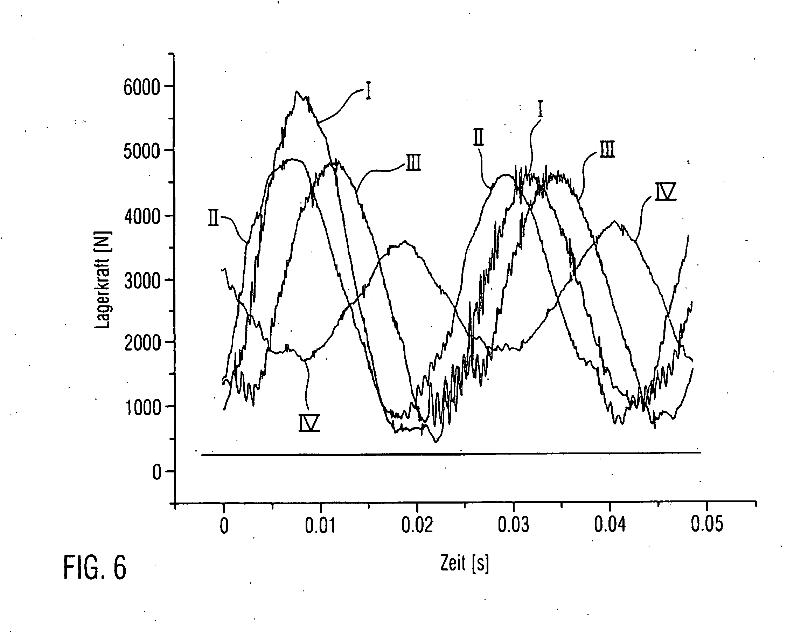

Fig. 6 zeigt die dynamische Belastung eines Kettenantriebs 1 in Form der Schwankungen der Lagerkraft des Antriebsrads, d.h. des Kettenrads 2 bei einem Einsatz als Steuerkettentriebs. Der Darstellung in Fig. 6 liegt eine Simulation auf Basis des in Fig. 1 gezeigten Kettenantriebs 1 mit einer Drehzahl von 1.233 Umdrehungen pro Minute (ca. 10% unterhalb der Resonanzdrehzahl) zugrunde. In diesem Diagramm ist durch die Kurve I der Verlauf der Lagerkraft ohne Kettenführung 8 am Kettenrad 2, aber auch die Längskräfte bei unterschiedlicher Lage der vorstehenden Abschnitte A der Kettenführung 8 dargestellt. Dabei ist bei der Kurve II der vorstehende Abschnitt A der Kettenführung in der gleichen Winkellage der maximalen Anregung angeordnet, entsprechend einer Winkellage von 0°, während der Abschnitt A bei Kurve III um 45° und bei Kurve IV um 90° dazu versetzt ist. Im Vergleich zum Verlauf der dynamischen Lagerkraft ohne eine Kettenführung 8 (Kurve I) wird bereits mit einer Winkellage von 0° und 45° zur Drehanregung (Kurve II und III) durch die Kettenführung 8 mit nichtkreisförmigen Umkreisprofil eine Verbesserung der dynamischen Belastung des Kettenantriebs 1 erreicht. Bei einer günstigen Lage der vorstehenden Abschnitte A der Stützkontur 9, d.h. zwischen dem Maxima der Drehanregung des Kettenrads 2 (durch eine Kurbelwelle) entsprechend einer Winkellage von 90°, verringert sich die Amplitude der dynamischen Lagerbelastung des Kettenrads 2 auf 30% gegenüber einer Belastung ohne Kompensation durch eine Kettenführung 8.

Bei einer dynamischen Belastung des Kettenantriebs 1 die dem Abtriebsmoment am Kettenrad 3 überlagert ist, kann mit einem erfindungsgemäßen Kettenrad 2 mit Kettenführung 8 sogar eine Reduzierung der Amplitude der Lagerkraft auf 10% erreicht werden.

## Patentansprüche

1. Kettenrad (2,3), insbesondere für einen Steuerkettentrieb, mit einer Drehachse, einem um die Drehachse angeordneten Zahnkranz (7) mit einer Vielzahl von um den Umfang verteilten, einander abwechselnden Zähnen (17) und Zahnlücken (16) sowie mindestens einer Kettenführung (8), wobei der Zahnkranz (7) und die Kettenführung (8) feststehend miteinander verbunden sind, die feststehende Kettenführung (8) eine am Umfang der Kettenführung (8) umlaufende Oberfläche aufweist, die eine Stützkontur (9) zur Anlage an Auflageflächen (15) von Kettenlaschen (13, 14) ausbildet und die Stützkontur (9) oder erhabene Bereiche der Stützkontur (9) auf einem gekrümmten Umfang liegen der den Umkreis der Kettenführung (8) bildet,
**dadurch gekennzeichnet, dass** der Umkreis der Kettenführung (8) ein relativ zu den Zähnen (17) und Zahnlücken (16) des Zahnkranzes feststehendes, nicht kreisförmiges Profil aufweist.

2. Kettenrad (2,3) nach Anspruch 1,
**dadurch gekennzeichnet, dass** der Abstand zwischen dem Umkreis und einem Mittelpunkt (M2) der Kettenführung (8) von Zahn zur Zahn zumindest teilweise variiert, um das nicht kreisförmige Profil zu bilden.

3. Kettenrad (2,3) nach Anspruch 1 oder 2,
**dadurch gekennzeichnet, dass** der Umkreis der Kettenführung (8) mindestens zwei vorstehende Abschnitte (A) aufweist.

4. Kettenrad (2,3) nach Anspruch 3,
**dadurch gekennzeichnet, dass** der Umkreis der Kettenführung (8) ein ellipsenförmiges Profil aufweist.

5. Kettenrad (2,3) nach Anspruch 4,
**dadurch gekennzeichnet, dass** das ellipsenförmige Profil der Kettenführung (8) ein Seitenverhältnis zwischen dem größten und kleinsten Abstand zum Mittelpunkt (M2) der Kettenführung (8) von kleiner als 1,025, bevorzugt zwischen 1,01 und 1,015, aufweist.

6. Kettenrad (2,3) nach einem der Ansprüche 1 bis 5,
**dadurch gekennzeichnet, dass** der Mittelpunkt (M2) der Kettenführung (8) in der Drehachse des Kettenrads (2,3) liegt.

7. Kettenrad (2,3) nach einem der Ansprüche 1 bis 6,
**dadurch gekennzeichnet, dass** zwei Kettenführungen (8) vorgesehen sind, wobei die Kettenführungen (8) symmetrisch angeordnet sind, insbesondere auf jeder Seite des Kettenrads (2,3) eine Kettenführung (8) vorgesehen ist.

8. Kettenrad (2,3) nach einem der Ansprüche 1 bis 7,
**dadurch gekennzeichnet, dass** der Zahnkranz (7) kreisförmig und/oder die Zähne (17) des Zahnkranzes (7) gleichförmig um die Drehachse des Kettenrads (2,3) angeordnet sind.

9. Kettenrad (2,3) nach einem der Ansprüche 1 bis 8,
**dadurch gekennzeichnet, dass** in einem Zahnlücken-Segment des Kettenrads mit kleinstem Abstand des nicht kreisförmigen Profils der Kettenführung (8) zu einem Mittelpunkt (M2) der Kettenführung (8) der kleinste Abstand derart gewählt ist, dass die Achse des in diesem Zahnlücken-Segment mit dem Zahnkranz (7) in Eingriff stehenden Kettengelenks auf dem Teilkreis des Zahnkranzes (7) liegt.

10. Kettenrad (2,3) nach einem der Ansprüche 1 bis 9,
**dadurch gekennzeichnet, dass** die Zahnlücken (16) flache Seitenflanken aufweisen.

11. Kettenrad (2,3) nach einem der Ansprüche 1 bis 10,
**dadurch gekennzeichnet, dass** der Zahnkranz (7) asymmetrische Zahnformen aufweist.

12. Steuerkettentrieb (1) mit Kompensation dynamischer Belastungen, mit einer Gelenkkette (4), insbesondere einer Rollenkette, durch Kettengelenke miteinander verbundene Innenkettenglieder und Außenkettenglieder, wobei die Innenkettenglieder und Außenkettenglieder parallel zueinander angeordnete Innenlaschen (13) und Außenlaschen (14) umfassen, einem Antriebskettenrad (2) und mindestens einem Abtriebskettenrad (3),
**dadurch gekennzeichnet, dass** mindestens eines der Kettenräder (2,3), bevorzugt das Antriebskettenrad (2), zur Kompensation der dynamischen Belastung als Kettenrad nach einem der Ansprüche 1 bis 11 ausgebildet ist.

13. Steuerkettentrieb nach Anspruch 12,
**dadurch gekennzeichnet, dass** die Innenlaschen (13) und/oder die Außenlaschen (14) eine Auflagefläche (15) zur Anlage an die umlaufende Stützkontur (9) der Kettenführung (8) aufweisen.

14. Steuerkettentrieb nach Anspruch 13,
**dadurch gekennzeichnet, dass** die Auflagefläche (15) der Innenlaschen (13) und/oder der Außenlaschen (14) im Wesentlichen parallel zur Laufrichtung der Gelenkkette (4) angeornet ist.

15. Steuerkettentrieb nach einem der Ansprüche 12 bis 14,
**dadurch gekennzeichnet, dass** das Antriebskettenrad (2) mit mindestens einer Kettenführung (8) ausgebildet ist und an einer Kurbelwelle eines Verbrennungsmotors angeordnet ist, wobei zu einem Zeitpunkt des größten Moments im Antriebskettenrad (2) der tangentiale Anlaufpunkt zwischen der Antriebskette (4) und dem Antriebskettenrad (2) im Wesentlichen mittig zwischen einem vorstehenden Abschnitt (A), der mit der Antriebskette (4) in Berührung steht, und einem folgenden zurückstehenden Abschnitt (B), der noch nicht mit der Antriebskette (4) in Berührung steht, angeordnet ist.

16. Steuerkettentrieb nach Anspruch 15,
**dadurch gekennzeichnet, dass** der Verbrennungsmotor ein Vierzylindermotor ist, wobei die Kettenführung (8) als ellipsenförmiges Profil ausgebildet ist und der mit der Antriebskette in Berührung stehende vorstehende Abschnitt (A) ca. 45° gegenüber dem tangentialen Anlaufpunkt versetzt angeordnet ist.

## Claims

1. A chain wheel (2, 3), in particular for a timing chain drive, comprising an axis of rotation, a sprocket (7) arranged around the axis of rotation and having a plurality of circumferentially distributed alternating teeth (17) and tooth gaps (16), and at least one chain guide (8), said sprocket (7) and said chain guide (8) being fixedly joined, said fixed chain guide (8) being provided with a surface which circumferentially extends on the circumference of the chain guide (8) and defines a support contour (9) for bearing on contact faces (15) of link plates (13, 14), and said support contour (9) or raised portions thereof extending along a curved circumference which constitutes the perimeter of the chain guide (8),
**characterized in that** the perimeter of the chain guide (8) has a non-circular profile which is fixed relative to the teeth (17) and the tooth gaps (16) of the sprocket.

2. A chain wheel (2, 3) according to claim 1,
**characterized in that** the distance between the perimeter and a centre (M2) of the chain guide (8) varies, at least partially, from one tooth to the next so as to define the non-circular profile.

3. A chain wheel (2, 3) according to claim 1 or 2,
**characterized in that** the perimeter of the chain guide (8) includes at least two projecting sections (A).

4. A chain wheel (2, 3) according to claim 3,
**characterized in that** the perimeter of the chain guide (8) has an elliptical profile.

5. A chain wheel (2, 3) according to claim 4,
**characterized in that** the elliptical profile of the chain guide (8) has an aspect ratio of the largest and smallest distances to the centre (M2) of the chain guide (8) which is smaller than 1.025, and preferably between 1.01 and 1.015.

6. A chain wheel (2, 3) according to one of the claims 1 to 5,
**characterized in that** the centre (M2) of the chain guide (8) is located in the axis of rotation of the chain wheel (2, 3).

7. A chain wheel (2, 3) according to one of the claims 1 to 6,
**characterized in that** two chain guides (8) are provided, said chain guides (8) being arranged symmetrically, especially such that one chain guide (8) is arranged on each side of the chain wheel (2, 3).

8. A chain wheel (2, 3) according to one of the claims 1 to 7,
**characterized in that** the sprocket (7) is circular and/or that the teeth (17) of the sprocket (7) are arranged uniformly around the axis of rotation of the chain wheel (2, 3).

9. A chain wheel (2, 3) according to one of the claims 1 to 8,
**characterized in that**, in a tooth gap segment of the chain wheel having the smallest distance of the non-circular profile of the chain guide (8) to a centre (M2) of the chain guide (8), the smallest distance is chosen such that the axis of the chain hinge meshing with the sprocket (7) in this tooth gap segment is located on the pitch circle of the sprocket (7).

10. A chain wheel (2, 3) according to one of the claims 1 to 9,
**characterized in that** the tooth gaps (16) have flat side flanks.

11. A chain wheel (2, 3) according to one of the claims 1 to 10,
**characterized in that** the sprocket (7) has asymmetric tooth shapes.

12. A timing chain drive (1) with compensation of dynamic loads, comprising a hinge chain (4), in particular a roller chain, including inner chain links and outer chain links joined by chain hinges, said inner chain links and said outer chain links comprising inner link plates (13) and outer link plates (14) which are arranged parallel to one another, a driving chain wheel (2) and at least one driven chain wheel (3),
**characterized in that**, for compensating the dynamic load, at least one of said chain wheels (2, 3), preferably the driving chain wheel (2), is implemented as a chain wheel according to one of the claims 1 to 11.

13. A timing chain drive according to claim 12,
**characterized in that** the inner link plates (13) and/or the outer link plates (14) are provided with contact faces (15) for bearing on the circumferentially extending support contour (9) of the chain guide (8).

14. A timing chain drive according to claim 13,
**characterized in that** the contact faces (15) of the inner link plates (13) and/or of the outer link plates (14) are arranged essentially parallel to the direction of movement of the hinge chain (4).

15. A timing chain drive according to one of the claims 12 to 14,
**characterized in that** the driving chain wheel (2) is provided with at least one chain guide (8) and arranged on a crankshaft of an internal combustion engine, the tangential point of contact between the driving chain (4) and the driving chain wheel (2) being located substantially centrally between a projecting section (A), which is in contact with the driving chain (4), and a subsequent non-projecting section (B), which is not yet in contact with the driving chain (4), at the time at which the highest moment occurs in the driving chain wheel (2).

16. A timing chain drive according to claim 15,
**characterized in that** the internal combustion engine is a four-cylinder engine, wherein the chain guide (8) is configured as an elliptical profile and the projecting section (A), which is in contact with the driving chain, is arranged such that it is displaced by approx. 45° relative to the tangential point of contact.

## Revendications

1. Pignon à chaîne (2, 3), en particulier pour un entraînement à chaîne de distribution, avec un axe de rotation, une couronne dentée (7) disposée autour de l'axe de rotation et présentant une pluralité de dents (17) et d'entredents (16) en alternance réparties sur la circonférence, ainsi qu'avec au moins un guidage de chaîne (8), dans lequel la couronne dentée (7) et le guidage de chaîne (8) sont reliés ensemble de façon stationnaire, le guidage de chaîne (8) stationnaire présente une surface circulant sur la circonférence du guidage de chaîne (8) et réalisant un contour de soutien (9) pour une application contre des surfaces d'appui (15) d'éclisses de chaîne (13, 14), et le contour de soutien (9) ou des zones en relief du contour de soutien (9) reposent sur une circonférence courbe qui constitue le cercle circonscrit du guidage de chaîne (8),
**caractérisé en ce que** le cercle circonscrit du guidage de chaîne (8) présente un profil non circulaire, stationnaire par rapport aux dents (17) et aux entredents (16) de la couronne dentée.

2. Pignon à chaîne (2, 3) selon la revendication 1, **caractérisé en ce que** la distance entre le cercle circonscrit et un centre (M2) du guidage de chaîne (8) est au moins en partie variable d'une dent à l'autre pour former le profil non circulaire.

3. Pignon à chaîne (2, 3) selon la revendication 1 ou 2, **caractérisé en ce que** le cercle circonscrit du guidage de chaîne (8) présente au moins deux portions en saillie (A).

4. Pignon à chaîne (2, 3) selon la revendication 3, **caractérisé en ce que** le cercle circonscrit du guidage de chaîne (8) présente un profil elliptique.

5. Pignon à chaîne (2, 3) selon la revendication 4, **caractérisé en ce que** le profil elliptique du guidage de chaîne (8) présente un rapport de côtés entre la plus grande et la plus petite distance jusqu'au centre (M2) du guidage de chaîne (8) de moins de 1,025, de préférence entre 1,01 et 1,015.

6. Pignon à chaîne (2, 3) selon l'une quelconque des revendications 1 à 5, **caractérisé en ce que** le centre (M2) du guidage de chaîne (8) se situe dans l'axe de rotation du pignon à chaîne (2, 3).

7. Pignon à chaîne (2, 3) selon l'une quelconque des revendications 1 à 6, **caractérisé en ce que** deux guidages de chaîne (8) sont prévus, dans lequel les guidages de chaîne (8) sont disposés de façon symétrique, en particulier un guidage de chaîne (8) étant prévu de chaque côté du pignon à chaîne (2, 3).

8. Pignon à chaîne (2, 3) selon l'une quelconque des revendications 1 à 7, **caractérisé en ce que** la couronne dentée (7) est disposée de façon circulaire et/ou les dents (17) de la couronne dentée (7) sont disposées de façon homogène autour de l'axe de rotation du pignon à chaîne (2, 3).

9. Pignon à chaîne (2, 3) selon l'une quelconque des revendications 1 à 8, **caractérisé en ce que** dans un segment d'entredents du pignon à chaîne avec la plus petite distance du profil non circulaire du guidage de chaîne (8) jusqu'à un centre (M2) du guidage de chaîne (8), la plus petite distance est choisie de telle sorte que l'axe de l'articulation de chaîne en prise dans ce segment d'entredents avec la couronne dentée (7) se situe sur le cercle primitif de la couronne dentée (7).

10. Pignon à chaîne (2, 3) selon l'une quelconque des revendications 1 à 9, **caractérisé en ce que** les entredents (16) présentent des faces latérales plates.

11. Pignon à chaîne (2, 3) selon l'une quelconque des revendications 1 à 10, **caractérisé en ce que** la couronne dentée (7) présente des formes de dent asymétriques.

12. Entraînement à chaîne de distribution (1) avec compensation des charges dynamiques, avec une chaîne à articulations (4), en particulier une chaîne à rouleaux, des maillons intérieurs et des maillons extérieurs reliés ensemble par des articulations de chaîne, dans lequel les maillons intérieurs et les maillons extérieurs comprennent des éclisses intérieures (13) et des éclisses extérieures (14) disposées en parallèle entre elles, un pignon à chaîne menant (2) et au moins un pignon à chaîne mené (3),
**caractérisé en ce qu'**au moins l'un des pignons à chaîne (2, 3), de préférence le pignon à chaîne menant (2), est réalisé pour compenser la charge dynamique en tant que pignon à chaîne selon l'une quelconque des revendications 1 à 11.

13. Entraînement à chaîne de distribution selon la revendication 12, **caractérisé en ce que** les éclisses intérieures (13) et/ou les éclisses extérieures (14) présentent une surface d'appui (15) pour une application contre le contour de soutien circulant (9) du guidage de chaîne (8).

14. Entraînement à chaîne de distribution selon la revendication 13, **caractérisé en ce que** la surface d'appui (15) des éclisses intérieures (13) et/ou des éclisses extérieures (14) est disposée substantiellement en parallèle au sens de la marche de la chaîne à articulations (4).

15. Entraînement à chaîne de distribution selon l'une quelconque des revendications 12 à 14, **caractérisé en ce que** le pignon à chaîne menant (2) est réalisé avec au moins un guidage de chaîne (8) et disposé sur un vilebrequin d'un moteur à combustion interne, dans lequel à un instant du plus grand moment dans le pignon à chaîne menant (2), le point de démarrage tangentiel entre la chaîne d'entraînement (4) et le pignon à chaîne menant (2) est disposé de façon centrale entre une portion en saillie (A) qui est en contact avec la chaîne d'entraînement (4) et une portion en retrait (B) suivante qui n'est pas encore en contact avec la chaîne d'entraînement (4).

16. Entraînement à chaîne de distribution selon la revendication 15, **caractérisé en ce que** le moteur à combustion interne est un moteur à quatre cylindres, dans lequel le guidage de chaîne (8) est réalisé comme un profil elliptique et la portion en saillie (A) en contact avec la chaîne d'entraînement est disposée de façon décalée d'environ 45° par rapport au point de démarrage tangentiel.
